# EUROPEAN PATENT APPLICATION

(11) **EP 4 742 345 A1**
(43) Date of publication of application: **13.05.2026**
(21) Application number: 25208876.0
(22) Date of filing: 15.10.2025
(51) Int. Cl.: H01M 10/04, H01M 10/0587, H01M 50/46, H01M 50/538

(54) **WOUND ELECTRODE ASSEMBLY**

(30) Priority: 11.11.2024 JP 2024196684
(71) Applicant: TOYOTA JIDOSHA KABUSHIKI KAISHA, Toyota-shi, Aichi-ken 471-8571 (JP)
(72) Inventor: TATEISHI, Mitsuru, Toyota-shi, 471-8571 (JP); UEDA, Masashi, Toyota-shi, 471-8571 (JP); IZUMI, Jun, Toyota-shi, 471-8571 (JP); MASUOKA, Shizuka, Toyota-shi, 471-8571 (JP); SATO, Aya, Toyota-shi, 471-8571 (JP); YAMAMOTO, Tatsuya, Kosai-shi, 431-0422 (JP); KATAYAMA, Yuji, Kosai-shi, 431-0422 (JP); MACHIDA, Keitaro, Kosai-shi, 431-0422 (JP)
(74) Representative: Kuhnen & Wacker Patent- und Rechtsanwaltsbüro PartG mbB

(57) **Abstract**

A wound electrode assembly (10) includes a separator (110) including a first electrode region (R1) and a second electrode region (R2), in each of which an electrode layer is provided, alternately spaced apart from each other. In the wound electrode assembly (10), the separator (110) is wound with a direction, in which first electrode region (R1) and the second electrode region (R2) are aligned, extending along a winding direction.

## Description

### CROSS REFERENCE TO RELATED APPLICATIONS

This nonprovisional application is based on Japanese Patent Application No. 2024-196684 filed on November 11, 2024 with the Japan Patent Office, the entire contents of which are hereby incorporated by reference.

### BACKGROUND

### Field

The present disclosure relates to a wound electrode assembly.

### Description of the Background Art

Japanese Patent Laying-Open No. 2019-096592 discloses, as a conventional wound electrode assembly, a structure in which at least one of a sheet-shaped positive electrode member and a sheet-shaped negative electrode member is an electrode member including a conductive layer and an active material layer stacked in the stated order on a surface of an insulating base member, and the positive electrode member and the negative electrode member are wound with a separator in between. The insulating base member has through-holes passing therethrough in a thickness direction.

### SUMMARY

When a sheet-shaped first electrode member including a first conductive layer and a first active material layer stacked in order on an insulating base member and a sheet-shaped second electrode member including a second conductive layer and a second active material layer stacked on a metal foil or an insulating base member are wound with a separator in between, the number of components increases.

The present disclosure has been made in view of the above problem. An object of the present disclosure is to provide a wound electrode assembly that can have a reduced number of components.

A wound electrode assembly according to the present disclosure includes a separator including a first electrode region and a second electrode region alternately spaced apart from each other, an electrode layer being provided in each region. The separator is wound with a direction, in which the first electrode region and the second electrode region are aligned, extending along a winding direction.

With the configuration described above, the wound electrode assembly, which is formed by winding of the separator with the electrode layers directly formed thereon, can have a reduced number of components.

In the wound electrode assembly according to the present disclosure, a first electrode layer may be provided in the first electrode region, and a second electrode layer having a polarity different from that of the first electrode layer may be provided in the second electrode region. The separator may include a first main surface and a second main surface. The first electrode layer may include a first conductive layer and a first active material layer. The second electrode layer may include a second conductive layer and a second active material layer. On each of the first main surface and the second main surface located in the first electrode region, the first conductive layer and the first active material layer may be stacked in a stated order from a separator side. On each of the first main surface and the second main surface located in the second electrode region, the second conductive layer and the second active material layer may be stacked in a stated order from the separator side.

With the configuration described above, the number of components of the wound electrode assembly can be reduced in the configuration in which the first electrode layer is formed in the first electrode region and the second electrode layer is formed in the second electrode region.

In the wound electrode assembly according to the present disclosure, the first conductive layer may include, on one side in a width direction orthogonal to the winding direction, a first exposed portion exposed from the first active material layer. The second conductive layer may include, on the one side in the width direction, a second exposed portion exposed from the second active material layer. The wound electrode assembly may further include a plurality of first tabs connected to the first exposed portion, and a plurality of second tabs connected to the second exposed portion.

With the configuration described above, a current can be passed to the first electrode layer and the second electrode layer through the first tabs and the second tabs.

In the wound electrode assembly according to the present disclosure, in each of the first electrode region and the second electrode region, a first electrode layer and a second electrode layer having a polarity different from that of the first electrode layer may be provided with the separator in between. The separator may include a first main surface and a second main surface. The first electrode layer may include a first conductive layer and a first active material layer. The second electrode layer may include a second conductive layer and a second active material layer. On each of the first main surface located in the first electrode region and the first main surface located in the second electrode region, the first conductive layer and the first active material layer may be stacked in a stated order from a separator side. On each of the second main surface located in the first electrode region and the second main surface located in the second electrode region, the second conductive layer and the second active material layer may be stacked in a stated order from the separator side.

With the configuration described above, the number of components of the wound electrode assembly can be reduced in the configuration in which the first electrode layer and the second electrode layer are formed in each of the first electrode region and the second electrode region.

In the wound electrode assembly according to the present disclosure, in the first electrode region, the first conductive layer may include, on one side in a width direction orthogonal to the winding direction, a first exposed portion exposed from the first active material layer. In the second electrode region, the second conductive layer may include, on the one side in the width direction, a second exposed portion exposed from the second active material layer. The wound electrode assembly may further include: a plurality of first tabs connected to the first exposed portion of the first conductive layer, without being connected to the second conductive layer, in the first electrode region; and a plurality of second tabs connected to the second exposed portion of the second conductive layer, without being connected to the first conductive layer, in the second electrode region.

With the configuration described above, a current can be passed to the first electrode layer and the second electrode layer through the first tabs and the second tabs.

In the wound electrode assembly according to the present disclosure, each region of the first electrode region and the second electrode region may have a length increasing along the winding direction from an inner side to an outer side in the winding direction.

With the configuration described above, the first electrode layer and the second electrode layer can be efficiently caused to face each other in the radial direction centered on the winding axis.

In the wound electrode assembly according to the present disclosure, the separator may include a non-formation region, in which the electrode layer is not provided, at a first end portion in the winding direction and on a second end portion in the winding direction, and between the first electrode region and the second electrode region. The non-formation region may be disposed inside the electrode layer located on an innermost side, between a plurality of the electrode layers adjacent to each other in a radial direction centered on a winding axis, and outside the electrode layer located on an outermost side.

The configuration described above can prevent the electrode layers adjacent to each other on the innermost side from coming into direct contact with each other, the first electrode layer and the second electrode layer adjacent to each other in the radial direction from coming into direct contact with each other, and the electrode layer located on the outermost side from coming into direct contact with a component such as a case located outside the wound electrode assembly.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a battery according to Embodiment 1.
Fig. 2 is an exploded perspective view of the battery according to Embodiment 1.
Fig. 3 is a sectional view of the battery shown in Fig. 1 as viewed in the direction of an arrow III-III.
Fig. 4 is a sectional view of a wound electrode assembly shown in Fig. 3 as viewed in the direction of an arrow IV-IV.
Fig. 5 is a sectional view of the wound electrode assembly shown in Fig. 3 as viewed in the direction of an arrow V-V.
Fig. 6 is a schematic partial sectional view of the wound electrode assembly shown in Fig. 3 as viewed in the direction of an arrow VI-VI.
Fig. 7 is a developed view of the wound electrode assembly according to Embodiment 1.
Fig. 8 is a sectional view of the wound electrode assembly shown in Fig. 7 as viewed in the direction of an arrow VIII-VIII.
Fig. 9 is a partial sectional view showing a region IX of the wound electrode assembly shown in Fig. 5 in an enlarged manner.
Fig. 10 is a partial sectional view of a region X of the wound electrode assembly shown in Fig. 6 in an enlarged manner.
Fig. 11 is a sectional view of a wound electrode assembly according to Embodiment 2.
Fig. 12 is a sectional view of the wound electrode assembly according to Embodiment 2, which is unfolded.
Fig. 13 is a partial sectional view showing a manner in which a first tab is provided in the wound electrode assembly according to Embodiment 2.
Fig. 14 is a partial sectional view showing a manner in which a second tab is provided in the wound electrode assembly according to Embodiment 2.

### DESCRIPTION OF THE PREFERRED EMBODIMENTS

Embodiments of the present disclosure will be described below with reference to the drawings. In the embodiments referred to below, the same or common portions have the same signs assigned thereto, and description thereof will not be repeated.

### (Embodiment 1)

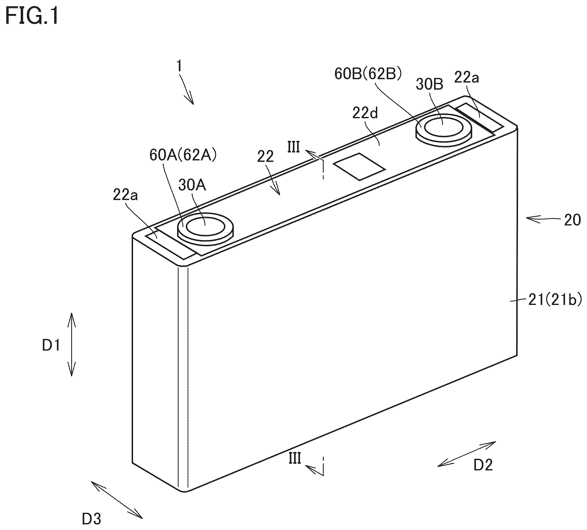

Fig. 1 is a perspective view of a battery according to Embodiment 1. A battery 1 according to Embodiment 1 will be described with reference to Fig. 1.

As shown in Fig. 1, battery 1 is a so-called rectangular battery. Battery 1 may be a secondary battery capable of charging and discharging, such as a lithium-ion battery or a nickel-metal hydride battery. Battery 1 may be used as, for example, a cell included in a power storage module mounted in an electrically powered vehicle.

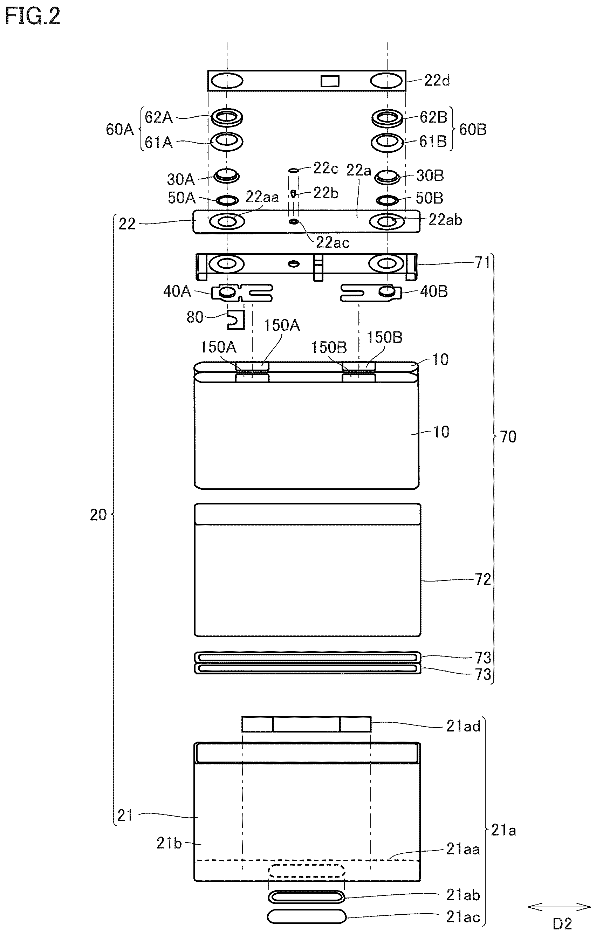

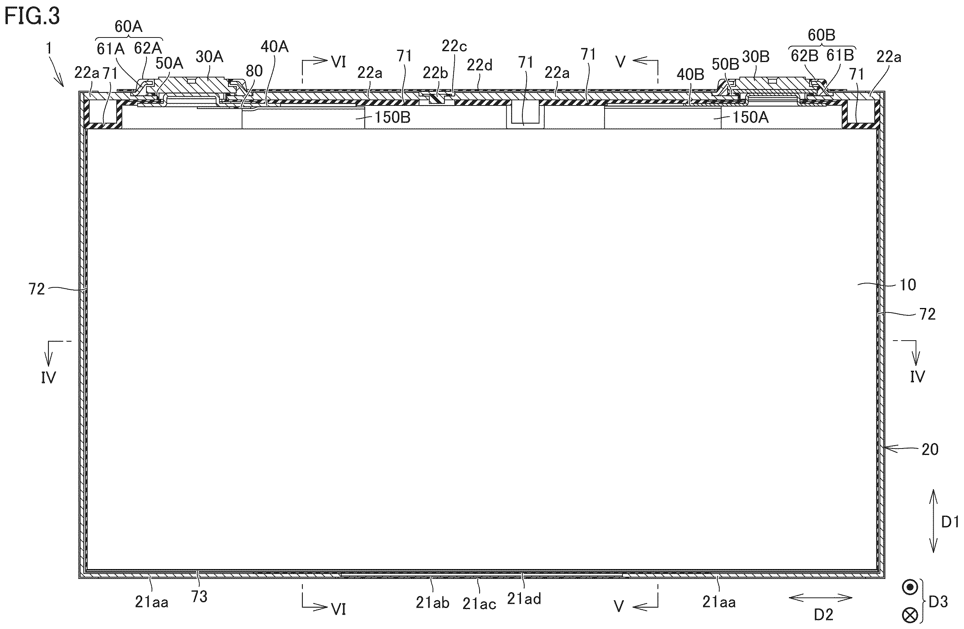

Fig. 2 is an exploded perspective view of the battery according to Embodiment 1. Fig. 3 is a sectional view of the battery of Fig. 1 as viewed in the direction of an arrow III-III.

As shown in Figs. 1 to 3, battery 1 includes a wound electrode assembly 10, a case 20, a first external terminal 30A, a second external terminal 30B, a first coupling member 40A, a second coupling member 40B, a first seal ring 50A, a second seal ring 50B, a first terminal support portion 60A, a second terminal support portion 60B, an insulating member 70, and a fuse protection portion 80. First, the components of battery 1 other than wound electrode assembly 10 will be described.

Case 20 is electrically conductive. An electrically conductive portion of case 20 is made of, for example, a metal such as aluminum. Case 20 houses wound electrode assembly 10. Case 20 also houses an electrolyte (not shown).

Case 20 includes a case body 21 and a lid 22. Case body 21 includes a bottom wall 21a and a peripheral wall 21b that rises from bottom wall 21a.

Bottom wall 21a includes a bottom body 21aa, a pressure release valve 21ab, an outer protective film 21ac, and an inner protective film 21ad. Peripheral wall 21b rises from bottom body 21aa. Pressure release valve 21ab is provided in bottom body 21aa. Outer protective film 21ac covers pressure release valve 21ab from the outside. Inner protective film 21ad covers pressure release valve 21ab from the inside. Bottom body 21aa and pressure release valve 21ab are made of a metal such as aluminum.

An opening is formed at the top of peripheral wall 21b. Peripheral wall 21b has an approximately rectangular external shape as viewed from the direction of the opening (the direction of the normal to the opening surface). The opening and bottom wall 21a are aligned in a first direction D1. First direction D1 may be the height direction or the upward-downward direction of battery 1. Peripheral wall 21b is made of a metal such as aluminum.

Lid 22 includes a lid body 22a, a sealing plug 22b, a plug cover 22c, and an insulating cover 22d.

Lid body 22a is joined to peripheral wall 21b by welding or the like so as to close the opening of peripheral wall 21b. Lid body 22a has a first coupling hole 22aa, a second coupling hole 22ab, and an injection hole 22ac. Injection hole 22ac is a through hole for injecting the electrolyte into case body 21 during manufacture of battery 1.

Sealing plug 22b seals injection hole 22ac. Plug cover 22c covers injection hole 22ac and sealing plug 22b. Insulating cover 22d covers injection hole 22ac, sealing plug 22b, and plug cover 22c.

First external terminal 30A and second external terminal 30B are provided so as to be exposed to the outside in battery 1. First coupling member 40A and second coupling member 40B are electrically conductive. First coupling member 40A and second coupling member 40B are at least partially disposed inside case 20.

First external terminal 30A or first coupling member 40A is inserted into first coupling hole 22aa. First external terminal 30A and first coupling member 40A are joined to each other. First coupling member 40A is joined to wound electrode assembly 10. As a result, first external terminal 30A is electrically connected to wound electrode assembly 10.

Second external terminal 30B or second coupling member 40B is inserted into second coupling hole 22ab. Second external terminal 30B and second coupling member 40B are joined to each other. Second coupling member 40B is joined to wound electrode assembly 10. As a result, second external terminal 30B is electrically connected to wound electrode assembly 10.

In the present embodiment, first external terminal 30A is a positive terminal, and second external terminal 30B is a negative terminal. First external terminal 30A and second external terminal 30B are aligned in a second direction D2. Second direction D2 is a direction orthogonal to first direction D1.

First seal ring 50A is provided along first coupling hole 22aa. First seal ring 50A is provided in the gap between lid body 22a and first external terminal 30A, and seals this gap. Second seal ring 50B is provided along second coupling hole 22ab. Second seal ring 50B is provided in the gap between lid body 22a and second external terminal 30B, and seals this gap. First seal ring 50A and second seal ring 50B have electrical insulation properties.

First terminal support portion 60A is locked to lid body 22a. First terminal support portion 60A supports first external terminal 30A from the outer peripheral side of first external terminal 30A. First terminal support portion 60A includes a first locking ring 61A and a first covering ring 62A. First locking ring 61A extends annularly so as to surround first coupling hole 22aa and is directly locked to lid body 22a. First covering ring 62A covers first locking ring 61A. First locking ring 61A supports first external terminal 30A via first covering ring 62A. First covering ring 62A is formed of a resin member having electrical insulation properties or relatively weak electrical conductivity.

Second terminal support portion 60B is locked to lid body 22a. Second terminal support portion 60B supports second external terminal 30B from the outer peripheral side of second external terminal 30B. Second terminal support portion 60B includes a second locking ring 61B and a second covering ring 62B. Second locking ring 61B extends annularly so as to surround second coupling hole 22ab and is directly locked to lid body 22a. Second covering ring 62B covers second locking ring 61B. Second locking ring 61B supports second external terminal 30B via second covering ring 62B. Second covering ring 62B is formed of an electrically insulating resin member.

Insulating member 70 has electrical insulation properties. Insulating member 70 is disposed between wound electrode assembly 10 and case 20. Insulating member 70 electrically insulates wound electrode assembly 10 and case 20 from each other. Insulating member 70 includes an insulating bracket 71, a peripheral surface insulating portion 72, and a bottom insulating portion 73.

Insulating bracket 71 is disposed between wound electrode assembly 10 and lid body 22a. Insulating bracket 71 is relatively rigid and is in contact with both wound electrode assembly 10 and lid body 22a. As a result, wound electrode assembly 10 is fixed to case 20 in first direction D1.

Peripheral surface insulating portion 72 is disposed between wound electrode assembly 10 and peripheral wall 21b. Wound electrode assembly 10 is formed of a film-shaped member.

Bottom insulating portion 73 is disposed between wound electrode body 10 and bottom wall 21a. Bottom insulating portion 73 is formed of a film-shaped member. In the present embodiment, bottom insulating portion 73 is bonded to wound electrode assembly 10. In addition, bottom insulating portion 73 covers only a part of the bottom surface of wound electrode assembly 10. Bottom insulating portion 73 may entirely cover the bottom surface.

As shown in Fig. 2, battery 1 according to the present embodiment includes a plurality of wound electrode assemblies 10. Battery 1 typically includes two wound electrode assemblies 10. These wound electrode assemblies 10 are disposed in a third direction D3. Third direction D3 is a direction orthogonal to both first direction D1 and second direction D2. Peripheral surface insulating portion 72 may integrally cover the plurality of wound electrode assemblies 10 such that these wound electrode assemblies 10 are fixed to each other. In the present embodiment, insulating member 70 includes a plurality of bottom insulating portions 73 such that these bottom insulating portions 73 correspond one-to-one to the plurality of wound electrode assemblies 10.

The following will describe one wound electrode assembly 10 of the plurality of wound electrode assemblies 10. Each of the plurality of wound electrode assemblies 10 may have a configuration described below.

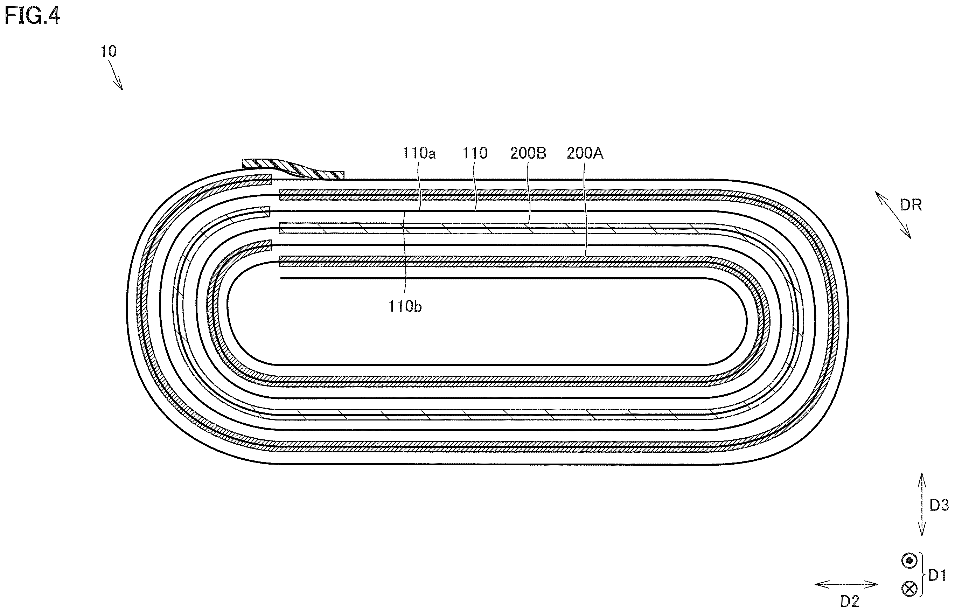

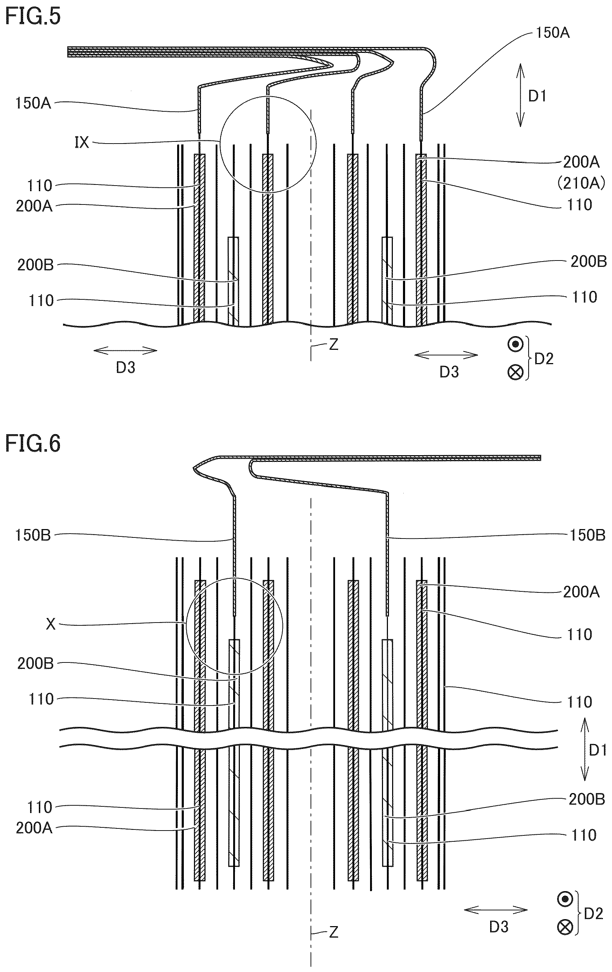

Fig. 4 is a sectional view of the wound electrode assembly of Fig. 3 as viewed in the direction of an arrow IV-IV. Fig. 5 is a sectional view of the wound electrode assembly of Fig. 3 as viewed in the direction of an arrow V-V. Fig. 6 is a schematic sectional view of the wound electrode assembly of Fig. 3 as viewed in the direction of an arrow VI-VI.

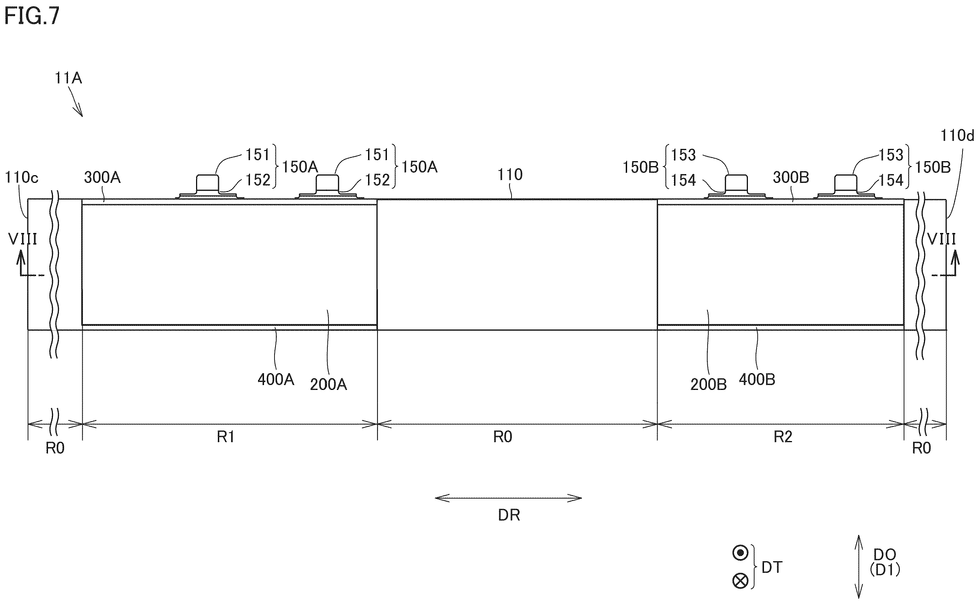

As shown in Figs. 4 to 6, wound electrode assembly 10 is formed by winding of a separator 110 with electrode layers formed thereon. Specifically, separator 110 includes a first electrode region R1 (see Fig. 7) in which a first electrode layer 200A is provided, and a second electrode region R2 (see Fig. 7) in which a second electrode layer 200B is provided, which are alternately spaced apart from each other, and is wound with the direction, in which first electrode region R1 and second electrode region R2 are aligned, extending along a winding direction DR.

The present embodiment describes by way of example the case where first electrode layer 200A is the negative electrode and second electrode layer 200B is the positive electrode, but the present disclosure is not limited thereto. First electrode layer 200A may be the positive electrode and second electrode layer 200B may be the negative electrode.

Separator 110 is formed of an insulating resin member. Separator 110 may include, for example, a polyolefin resin or the like. Separator 110 may be substantially made of, for example, the polyolefin resin. The polyolefin resin may include, for example, at least one selected from the group consisting of polyethylene (PE) and polypropylene (PP).

Wound electrode assembly 10 includes a plurality of first tabs 150A and a plurality of second tabs 150B.

The plurality of first tabs 150A are connected, on one end side, to a first conductive layer 210A of first electrode layer 200A, which will be described later. The plurality of first tabs 150A are joined, on the other side, to first coupling member 40A described above by ultrasonic welding or the like.

The plurality of second tabs 150B are connected, on one end side, to a second conductive layer 210B of second electrode layer 200B, which will be described later. The plurality of second tabs 150B are joined, on the other end side, to second coupling member 40B described above by ultrasonic welding or the like.

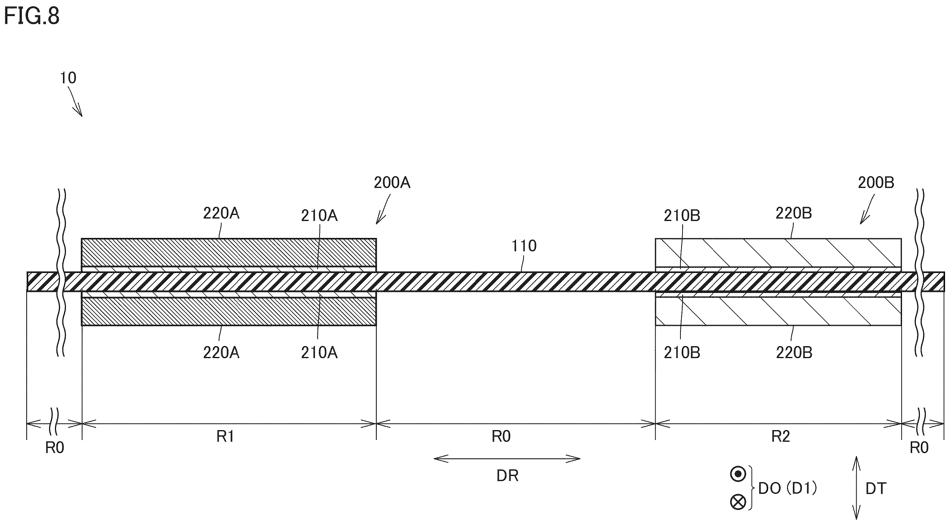

Fig. 7 is a developed view of the wound electrode body of Embodiment 1. Fig. 8 is a sectional view of the wound electrode assembly shown in Fig. 7 as viewed in the direction of an arrow VIII-VIII.

As shown in Figs. 7 and 8, separator 110 has a non-formation region R0, in which no electrode layer is provided, at a first end portion 110c in the winding direction and at a second end portion 110d in the winding direction, and between first electrode region R1 and second electrode region R2. First end portion 110c forms the outer end portion in the winding state, and second end portion 110d forms the inner end portion in the winding state. Separator 110 has a first main surface 110a and a second main surface 110b. First main surface 110a faces outward, and second main surface 110b faces inward.

As described above, first electrode layer 200A is provided in first electrode region R1. First electrode layer 200A includes first conductive layer 210A and a first active material layer 220A.

Each of first main surface 110a and second main surface 110b located in first electrode region R1 has first conductive layer 210A and first active material layer 220A stacked in the stated order from the separator 110 side. In other words, in first electrode region R1, first conductive layer 210A is provided on each of first main surface 110a and second main surface 110b, and first active material layer 220A is stacked on each of first conductive layer 210A on first main surface 110a and first conductive layer 210A on second main surface 110b.

First conductive layer 210A is provided by, for example, vapor deposition of a copper-containing metal on first main surface 110a and second main surface 110b. First conductive layer 210A may also be a film-shaped member adhered to separator 110. First active material layer 220A is, for example, a negative-electrode active material layer.

Each of first main surface 110a and second main surface 110b located in second electrode region R2 has second conductive layer 210B and a second active material layer 220B stacked in the stated order from the separator 110 side. In other words, in second electrode region R2, second conductive layer 210B is provided on each of first main surface 110a and second main surface 110b, and second active material layer 220B is stacked on each of second conductive layer 210B on first main surface 110a and second conductive layer 210B on second main surface 110b.

Second conductive layer 210B is provided by, for example, vapor deposition of an aluminum-containing metal on first main surface 110a and second main surface 110b. Second conductive layer 210B may also be a film-shaped member bonded to separator 110. Second active material layer 220B is, for example, a positive-electrode active material layer.

As shown in Figs. 4 and 7, with separator 110 wound, non-formation region R0 is disposed inside the innermost electrode layer (more specifically, the first electrode layer) , between the electrode layers (the first electrode layer and the second electrode layer) adjacent to each other in the radial direction centered on the winding axis, and outside the outermost electrode layer (more specifically, the first electrode layer).

This can prevent the innermost electrode layers from coming into direct contact with each other, first electrode layer 200A and second electrode layer 200B, which are adjacent to each other in the radial direction, from coming into direct contact with each other, and the outermost electrode layer from coming into direct contact with a component such as case 20 located outside wound electrode assembly 10.

Further, each region of first electrode region R1 and second electrode region R2 has a length increasing along the winding direction from the inner side to the outer side in the winding direction. First electrode layer 200A located on the outermost side has a length along the winding direction that is longer than that of second electrode layer 200B disposed on the inner circumferential side in the winding direction following first electrode layer 200A. Further, second electrode layer 200B has a length along the winding direction that is longer than that of first electrode layer 200A disposed on the inner circumferential side in the winding direction following second electrode layer 200B. In other words, second electrode layer 200B has a longer length along the winding direction than that of first electrode layer 200A located on the innermost side.

As a result, first electrode layer 200A and second electrode layer 200B can be efficiently caused to face each other in the radial direction centered on the winding axis. First electrode layer 200A located on the outermost side faces, in the radial direction, second electrode layer 200B disposed on the inner circumferential side in the winding direction following first electrode layer 200A. Further, second electrode layer 200B faces, in the radial direction, first electrode layer 200A disposed on the inner circumferential side in the winding direction following second electrode layer 200B.

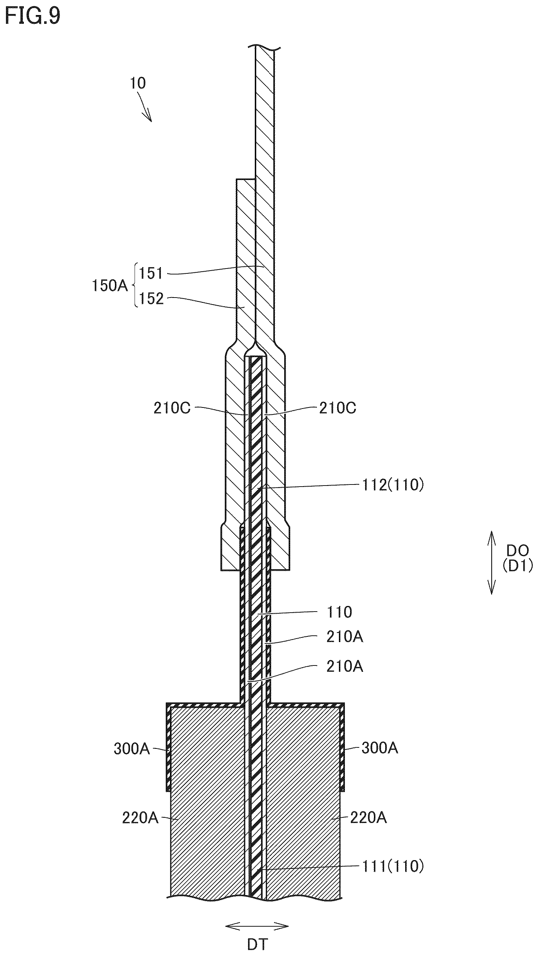

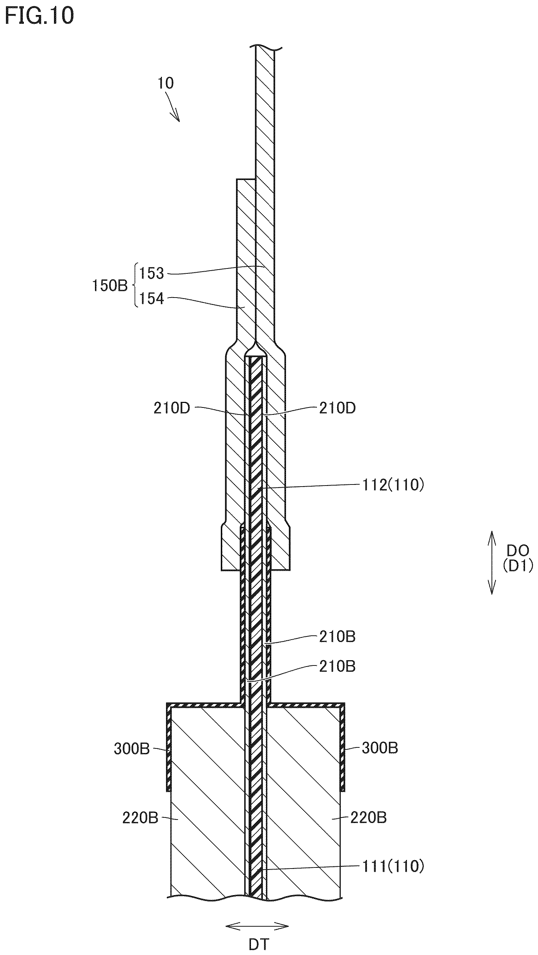

Fig. 9 is a partial sectional view of a region IX of the wound electrode assembly shown in Fig. 5 in an enlarged manner. Fig. 10 is a partial sectional view of a region X of the wound electrode assembly shown in Fig. 6 in an enlarged manner.

As show in Figs. 7, 9, and 10, wound electrode assembly 10 includes a first protective portion 300A, a second protective portion 300B, a lower first protective portion 400A, and a lower second protective portion 400B. First protective portion 300A and lower first protective portion 400A protect the upper end portion and the lower end portion of first active material layer 220A in first electrode region R1. Second protective portion 300B and lower second protective portion 400B protect the upper end portion and the lower end portion of second active material layer 220B in second electrode region R2.

First protective portion 300A has electrical insulation properties and is made of, for example, ceramic. First protective portion 300A covers the upper portion of first active material layer 220A. First protective portion 300A further covers separator 110 between first tab 150A and first active material layer 220A.

Second protective portion 300B has electrical insulation properties and is made of, for example, ceramic. Second protective portion 300B covers the upper portion of second active material layer 220B. Second protective portion 300B further covers separator 110 between second tab 150B and second active material layer 220B.

Lower first protective portion 400A has electrical insulation properties and is made of, for example, ceramic. Lower first protective portion 400A covers the lower portion of first active material layer 220A.

Lower second protective portion 400B has electrical insulation properties and is made of, for example, ceramic. Lower second protective portion 400B covers the lower portion of second active material layer 220B.

As shown in Fig. 9, first conductive layer 210A has a first exposed portion 210C exposed from first active material layer 220A on one side in a width direction D0 orthogonal to the winding direction. Width direction D0 is a direction parallel to first direction D1 described above. First exposed portion 210C is provided on first main surface 110a and second main surface 110b.

Separator 110 has a strip-shaped main body 111 and a plurality of projecting piece portions 112 that project from main body 111 to one side in width direction D0. The plurality of projecting piece portions 112 are provided at positions corresponding to the plurality of first tabs 150A and 150B. First exposed portion 210C described above is mainly provided on projecting piece portion 112.

In each first electrode region R1, the plurality of first tabs 150A are connected to first exposed portion 210C. Specifically, the plurality of first tabs 150A are connected to the portion of first exposed portion 210C which is exposed from first protective portion 300A.

First tab 150A includes a first foil portion 151 and a second foil portion 152. First foil portion 151 and second foil portion 152 are connected to first exposed portion 210C while sandwiching the upper end portion of separator 110 and first exposed portion 210C in between in a thickness direction DT. First foil portion 151 and second foil portion 152 are joined to each other by ultrasonic welding or the like.

As shown in Fig. 10, second conductive layer 210B has a second exposed portion 210D exposed from second active material layer 220B on one side in width direction D0 orthogonal to the winding direction. Second exposed portion 210D is provided on first main surface 110a and second main surface 110b. Second exposed portion 210D is mainly provided on projecting piece portion 112.

In each second electrode region R2, the plurality of second tabs 150B are connected to second exposed portion 210D. Specifically, the plurality of second tabs 150B are connected to the portion of second exposed portion 210D which is exposed from second protective portion 300B.

Second tab 150B includes a third foil portion 153 and a fourth foil portion 154. Third foil portion 153 and fourth foil portion 154 are connected to second exposed portion 210D while sandwiching the upper end portion of separator 110 and second exposed portion 210D in between in thickness direction DT. Third foil portion 153 and fourth foil portion 154 are joined to each other by ultrasonic welding or the like.

As described above, wound electrode assembly 10 according to Embodiment 1 is configured by winding of separator 110 with alternately spaced first electrode region R1 and second electrode region R2, in each of which an electrode layer is provided. This configuration can have a reduced number of components compared to the configuration in which a positive electrode sheet and a negative electrode sheet are wound with a separator in between.

Embodiment 1 has described by way of example the case where first active material layer 220A and second active material layer 220B have the same size, but the present disclosure is not limited thereto. The size of first active material layer 220A may be larger than the size of second active material layer 220B. In this case, when first active material layer 220A is the negative electrode, dendrite precipitation from second active material layer 220B can be suppressed.

### (Embodiment 2)

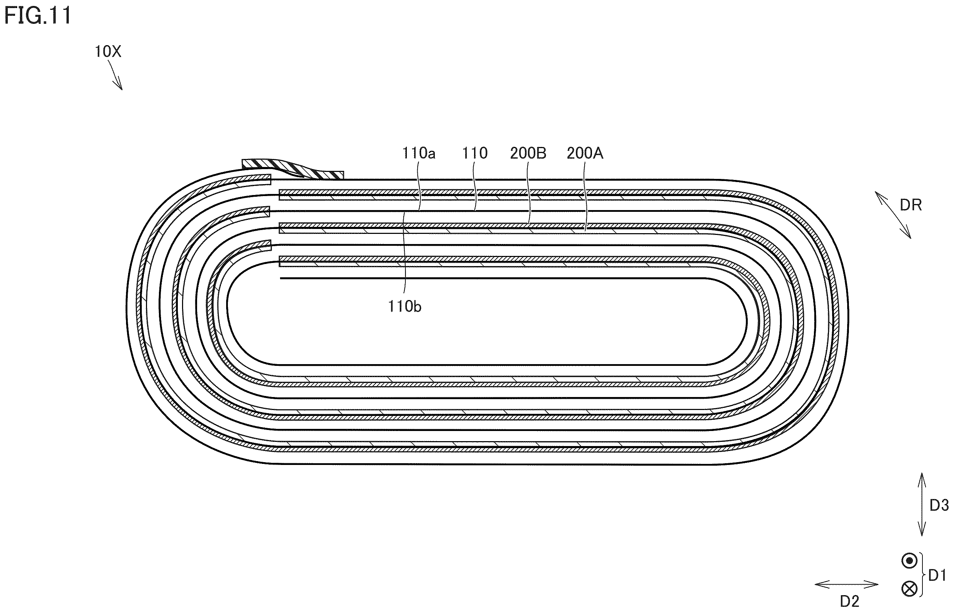

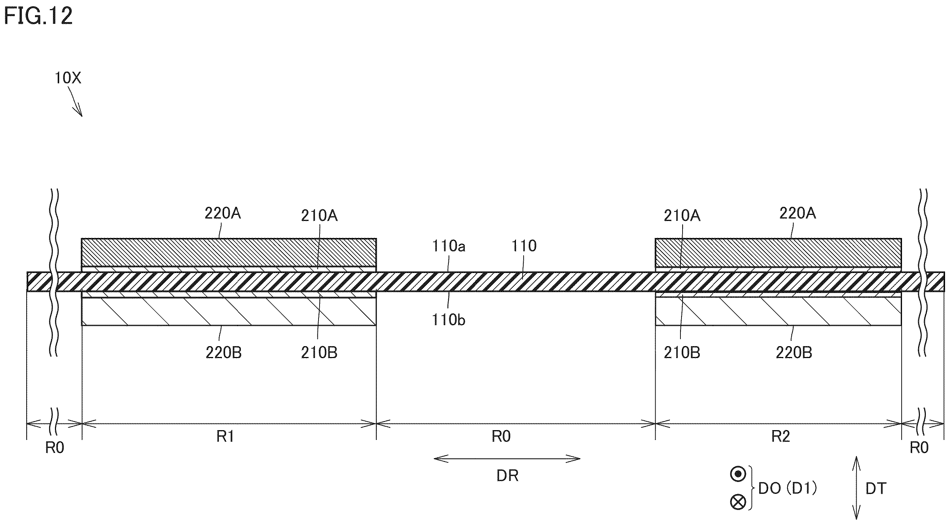

Fig. 11 is a sectional view of a wound electrode assembly according to Embodiment 2. Fig. 12 is a sectional view of the wound electrode assembly according to Embodiment 2, which is unfolded. Fig. 11 corresponds to the schematic partial sectional view of the wound electrode assembly shown in Fig. 3 in Embodiment 1 as viewed in the direction of an arrow VI-VI. Fig. 12 corresponds to the sectional view of the wound electrode assembly shown in Fig. 7 in Embodiment 1 as viewed in the direction of an arrow VIII-VIII. Referring to Figs. 11 and 12, a wound electrode assembly 10X according to Embodiment 2 will be described.

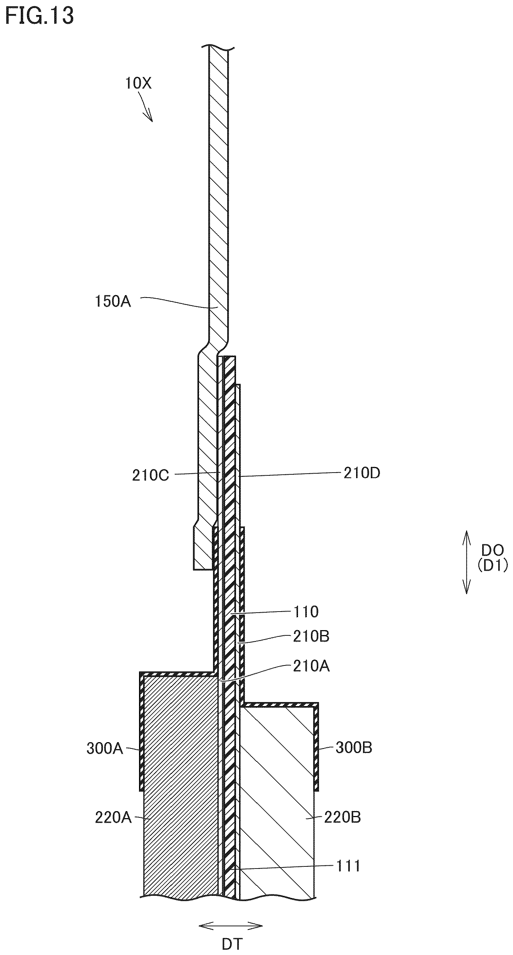

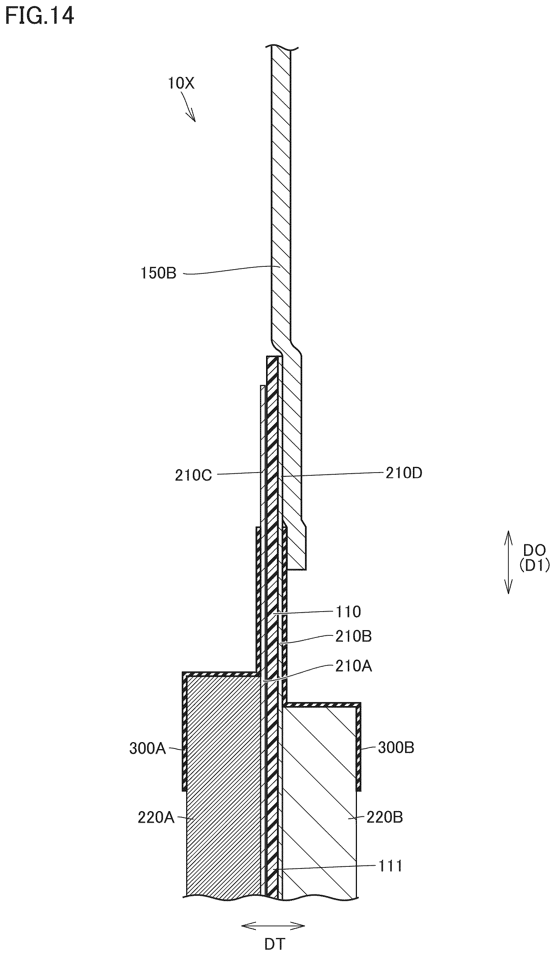

As shown in Figs. 11 and 12, wound electrode assembly 10X according to Embodiment 2 differs from wound electrode assembly 10 according to Embodiment 1 mainly in the arrangements of first electrode layer 200A and second electrode layer 200B. Additionally, as will be described later with reference to Figs. 13 and 14, configurations of first tab 150A and second tab 150B also differ. The other configurations are substantially the same.

In Embodiment 2, first electrode layer 200A and second electrode layer 200B are provided while sandwiching separator 110 in between in each of first electrode region R1 and second electrode region R2.

Specifically, first conductive layer 210A and first active material layer 220A are stacked in the stated order from the separator 110 side on each of first main surface 110a of separator 110 located in first electrode region R1 and first main surface 110a of separator 110 located in second electrode region R2. On each of second main surface 110b located in first electrode region R1 and second main surface 110b located in second electrode region R2, second conductive layer 210B and second active material layer 220B are stacked in the stated order from the separator 110 side.

The size of first active material layer 220A may be larger than the size of second active material layer 220B. Specifically, the upper end of first active material layer 220A in width direction D0 may be located above the upper end of second active material layer 220B in width direction D0. The lower end of first active material layer 220A in width direction D0 may be located below the lower end of second active material layer 220B in width direction D0.

Figs. 13 and 14 are partial sectional views showing a manner in which a first tab is provided and a manner in which a second tab is provided, respectively, in the wound electrode assembly according to Embodiment 2. Fig. 13 corresponds to Fig. 9 according to Embodiment 1, and specifically corresponds to the partial sectional view showing a region XI of the wound electrode assembly shown in Fig. 5 in an enlarged manner. Fig. 14 corresponds to Fig. 10 according to Embodiment 1, and specifically corresponds to the partial sectional view of region X of the wound electrode assembly shown in Fig. 6 in an enlarged manner.

As shown in Figs. 13 and 14, in Embodiment 2, in each of first electrode region R1 and second electrode region R2, the upper end portion of first active material layer 220A and the upper end portion of second active material layer 220B are covered by first protective portion 300A and second protective portion 300B, respectively. Similarly, although not shown here, in each of first electrode region R1 and second electrode region R2, the lower end portion of first active material layer 220A and the lower end portion of second active material layer 220B are covered by lower first protective portion 400A and lower second protective portion 400B, respectively.

As shown in Fig. 13, in first electrode region R1, first conductive layer 210A has first exposed portion 210C exposed from first active material layer 220A on one side in width direction D0 orthogonal to the winding direction, and second conductive layer 210B has second exposed portion 210D exposed from second active material layer 220B on one side in width direction D0.

In first electrode region R1, first tab 150A is connected to first exposed portion 210C of first conductive layer 210A without being connected to second conductive layer 210B. More specifically, first tab 150A is joined to the portion of first exposed portion 210C which is exposed from first protective portion 300A. First tab 150A is formed of, for example, a single sheet of metal foil. First tab 150A may be formed of a stack of a plurality of metal foils as long as it is formed in a plate shape.

As shown in Fig. 14, also in second electrode region R2, first conductive layer 210A has first exposed portion 210C exposed from first active material layer 220A on one side in width direction D0 orthogonal to the winding direction, and second conductive layer 210B has second exposed portion 210D exposed from second active material layer 220B on one side in width direction D0.

In second electrode region R2, second tab 150B is connected to second exposed portion 210D of second conductive layer 210B without being connected to first conductive layer 210A. More particularly, second tab 150B is joined to the portion of second exposed portion 210D which is exposed from second protective portion 300B. Second tab 150A is formed of, for example, a single sheet of metal foil. Second tab 150A may be formed of a stack of a plurality of metal foils as long as it is formed in a plate shape.

Even with the configuration as described above, wound electrode assembly 10X is configured by winding of separator 110 with alternately spaced first electrode region R1 and second electrode region R2, in each of which an electrode layer is provided. Thus, wound electrode assembly 10X according to Embodiment 2 achieves effects substantially similar to those of wound electrode assembly 10 according to Embodiment 1.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A wound electrode assembly (10, 10X) comprising a separator (110) including a first electrode region (R1) and a second electrode region (R2) alternately spaced apart from each other, an electrode layer being provided in each region,
wherein the separator (110) is wound with a direction extending along a winding direction, the first electrode region (R1) and the second electrode region (R2) being aligned in the direction.

2. The wound electrode assembly (10) according to claim 1, wherein
a first electrode layer (200A) is provided in the first electrode region (R1),
a second electrode layer (200B) having a polarity different from that of the first electrode layer (200A) is provided in the second electrode region (R2),
the separator (110) includes a first main surface (110a) and a second main surface (110b),
the first electrode layer (200A) includes a first conductive layer (210A) and a first active material layer (220A),
the second electrode layer (200B) includes a second conductive layer (210B) and a second active material layer (220B),
on each of the first main surface (110a) and the second main surface (110b) located in the first electrode region (R1), the first conductive layer (210A) and the first active material layer (220A) are stacked in a stated order from a separator (110) side, and
on each of the first main surface (110a) and the second main surface (110b) located in the second electrode region (R2), the second conductive layer (210B) and the second active material layer (220B) are stacked in a stated order from the separator (110) side.

3. The wound electrode assembly (10) according to claim 2, wherein
the first conductive layer (210A) includes, on one side in a width direction orthogonal to the winding direction, a first exposed portion (210C) exposed from the first active material layer (220A),
the second conductive layer (210B) includes, on the one side in the width direction, a second exposed portion (210D) exposed from the second active material layer (220B), and
the wound electrode assembly (10) further comprises:
a plurality of first tabs (150A) connected to the first exposed portion (210C); and
a plurality of second tabs (150B) connected to the second exposed portion (210D).

4. The wound electrode assembly (10X) according to claim 1, wherein
in each of the first electrode region (R1) and the second electrode region (R2), a first electrode layer (200A) and a second electrode layer (200B) having a polarity different from that of the first electrode layer (200A) are provided with the separator (110) in between,
the separator (110) includes a first main surface (110a) and a second main surface (110b),
the first electrode layer (200A) includes a first conductive layer (210A) and a first active material layer (220A),
the second electrode layer (200B) includes a second conductive layer (210B) and a second active material layer (220B),
on each of the first main surface (110a) located in the first electrode region (R1) and the first main surface (110a) located in the second electrode region (R2), the first conductive layer (210A) and the first active material layer (220A) are stacked in a stated order from a separator (110) side, and
on each of the second main surface (110b) located in the first electrode region (R1) and the second main surface (110b) located in the second electrode region (R2), the second conductive layer (210B) and the second active material layer (220B) are stacked in a stated order from the separator (110) side.

5. The wound electrode assembly (10X) according to claim 4, wherein
in the first electrode region (R1), the first conductive layer (210A) includes, on one side in a width direction orthogonal to the winding direction, a first exposed portion (210C) exposed from the first active material layer (220A),
in the second electrode region (R2), the second conductive layer (210B) has, on the one side in the width direction, a second exposed portion (210D) exposed from the second active material layer (220B), and
the wound electrode assembly (10X) further comprises:
a plurality of first tabs (150A) connected to the first exposed portion (210C) of the first conductive layer (210A), without being connected to the second conductive layer (210B), in the first electrode region (R1); and
a plurality of second tabs (150B) connected to the second exposed portion (210D) of the second conductive layer (210B), without being connected to the first conductive layer (210A), in the second electrode region (R2).

6. The wound electrode assembly (10, 10X) according to any one of claims 1 to 5, wherein each region of the first electrode region (R1) and the second electrode region (R2) has a length increasing along the winding direction from an inner side to an outer side in the winding direction.

7. The wound electrode assembly (10, 10X) according to any one of claims 1 to 5, wherein
the separator (110) includes a non-formation region (R0) at a first end portion (110c) in the winding direction and at a second end portion (110d) in the winding direction, and between the first electrode region (R1) and the second electrode region (R2), the electrode layer not being provided in the non-formation region (R0), and
the non-formation region (R0) is disposed inside the electrode layer located on an innermost side, between a plurality of the electrode layers adjacent to each other in a radial direction centered on a winding axis, and outside the electrode layer located on an outermost side.
